Europäisches Patentamt

European Patent Office

Office européen des brevets

(11) Publication number: **0 226 960**

**A1**

## (12) EUROPEAN PATENT APPLICATION

(21) Application number: **86117245.0**

(22) Date of filing: **11.12.86**

(51) Int. Cl.⁴: **G11B 27/10 , G11B 20/12**

(30) Priority: **11.12.85 JP 278621/85**

(43) Date of publication of application:
**01.07.87 Bulletin 87/27**

(84) Designated Contracting States:
**DE FR GB**

(71) Applicant: **Computer Services Corporation
No. 6-1, Nishishinjuku 2-chome
Shinjuku-ku Tokyo 160(JP)**

(72) Inventor: **Hasemi, Takashi c/o Computer
Services Corp.
6-1, Nishi-Shinjuku 2-chome
Shinjuku-ku Tokyo(JP)**

(74) Representative: **Baillie, Iain Cameron et al
c/o Ladas & Parry Isartorplatz 5
D-8000 München 2(DE)**

(54) **Synchronous control system.**

(57) The present invention is applied to a synchronous control system for use in the reading of data from a data information storage medium in which the data is written so that unit states of changes of physical or chemical changes of the storage medium may correspond to bits of digital data constituting the data information to be stored and the states of the changes are disposed at a predetermined pitch.

The present invention utilizes the facts that the unit states of the changes of the medium storing the data information are formed at predetermined pitches and the mechanism for relatively moving the reading head can operate constantly within an extremely short period of time without causing any substantial change.

A reading head of a reading apparatus is relatively moved with respect to the data information storage medium, between two reference points, the distance of which is known, under the same conditions as in the data reading, to measure a time necessary to move between the two points. A time necessary to move one pitch of the unit states of the changes storing the data information is then determined. As a result of this, the reading of the states of the changes by the reading head of the reading apparatus is synchronized.

Fig. I

## SYNCHRONOUS CONTROL SYSTEM

### a. Field of the Invention

This invention relates to a synchronous control system for use in the reading of data from a data information storage medium in which data to be stored are written in the form physical or chemical changes on states of the storage medium at predetermined pitches. The states of the changes on the storage medium are formed so as to correspond to bits of the data to be stored, respectively.

### b. Related Arts

Optical storage media are typical examples of the data information storage media in which data to be stored are written in the form of changes of physical or chemical states of the storage media at predetermined pitches so as to form one-to-one correspondence between bits of the data and the states. Recently, the optical recording media have come into the limelight, in place of an IC card, as pocket high-density recording media handy to carry.

The conventional optical storage media include, for example, (1) an optical recording medium having small pits or projections on a light reflecting face thereof so as to record digital signals utilizing a difference in reflectivity due to the pits or projections; (2) an optical recording medium having light and dark patterns on a light reflecting face or a light transmitting face thereof to record digital signals; and (3) an optical recording medium having polarized patterns on a light reflecting or transmitting face thereof to record digital signals. The data recorded in these optical recording media as mentioned above are read by irradiating light beams such as laser beams to detect optical changes of reflected or transmitted beams due to the difference in reflectivity or polarization and converting the changes into digital values.

Such optical recording media enable extremely high-density data recording. Therefore, even if the optical recording media are formed in a card shape, the storage capacity is by far larger than that of the existing IC card. The optical recording media of a card shape can be used for various purposes which have heretofore not been realized because of a shortage of the storage capacity, such as a personal medical record, a dictionary or the like.

In the data information storage media of the kinds as described above, the data informeation is generally stored in the form of digital data for convenience of processing and easiness of error correction. The digital data may be stored in various ways. However, one of the most fundamental ways is such that a unit state of physical or chemical changes is formed so as to correspond to one bit of the digital data, i.e. "1" or "0" and sequencially arranged in a line according to the contents of the data. Typically, a state H of high reflectivity and a state L of low reflectivity are formed as unit states of changes so that they may correspond to the respective bits "1" and "0" of the data. The states H and L are serially arranged in a line according to the contents of the data.

This way of data writing is advantageous in that the processing in the writing and reading is easy and that a writing/reading apparatus may be formed of a simple circuit formation and manufactured at a reasonable cost, since the unit states of changes are formed so as to correspond to the digital values one to one.

In this method, however, it is not easy to discretely distinguish the bits during the reading when the same states of changes, for example, the states "H" continue like "H H H". To avoid the continual H H H, a blank region where no data is stored may intervene between the respective unit states of changes to space the same from each other. In this case, it is necessary to distinctively distinguish the regions where data is stored and the regions where no data is stored, in the reading of the data stored. In other words, the reading operation of a reading head must be synchronized with the unit states of the physical or chemical changes, unit elements of the data storage.

The synchronization for this purpose may be attained, for example, by providing synchronizing marks or signals adjacent to the unit states of the physical or chemical changes. In this case, the synchronizing marks or signals are disposed at the same pitches as that of the unit states of the changes, since the unit states of the changes are formed at predetermined pitches whether they are disposed continuously or spacedly.

According to this method, it suffices that the data reads at a position where the reading head detects the synchronizing data, irrespective of possible fluctuation in the speed of the relative movement of the reading head with respect to the data information storage medium. Thus, this method is advantageously easy to control the relative movement of the reading head.

This method, however, has such a shortcoming that a synchronizing data track is needed for each of the data track. This drawback becomes serious especially when the data information storage medium is formed in a card, since the storage region is small and the amount of recordable data is much reduced and restricted by the synchronizing data.

It is therefore an object of the present invention to provide a synchronous control system which is capable of omitting tracks exclusive for synchronizing data to increase the amount of recordable data and yet assuring accurate synchronization.

## DISCLOSURE OF THE INVENTION

The present invention is applied to a synchronous control system for use in the reading of data from a data information storage medium in which the data to be stored are written so that unit states of physical or chemical changes of the storage medium may correspond to the bits "1" and "0" of the digital data and the unit states are formed at predetermined pitches.

In the synchronous control system of the present invention, a reading head of a reading apparatus is relatively moved between two reference points preliminarily set on the data information storage medium, the distance between which is known preliminarily, with respect to the data information storage medium. The relative movement between the reading head and the data information storage medium is carried out under the same conditions as in the data reading. Thus, a time taken to move between the two reference points is measured. The distance between the two reference points and the measured time are used to determine a time necessary for the reading head to relatively move one pitch of the train of the unit states of the changes on the data track where the data information is stored. The thus determined time is utilized to synchronize the reading of the states of the changes by the reading head with the elements of the data, i.e. the unit states of the changes.

The two reference points may be selected or provided freely so far as they can be detected by the reading head and the distance between the two reference points is known. For example, if there are provided, in the data track, a start bit and a stop bit, the start bit and the stop bit may be used as the reference points. Alternatively, a special reference point may be additionally provided outer the start bit. In the latter case, this special reference point and the start bit are used as the reference points. Or, two additional reference points may be provided so as to be disposed along the data track.

The distance between the two reference points is not critical and may be selected freely, but it is preferably integral multiples of a pitch of the unit states of the changes storing the data information.

The time necessary for the relative movement of the reading head of the reading apparatus between the reference points is measured in such a manner that the reading head is relatively moved under the same conditions as in the data reading and for example reference pulses are counted within the relative movement between the points.

The time necessary for the reading head to relatively move one pitch of the unit states of the changes storing the data information is determined based on the distance between the two points and the measured time. For example, if the pitches of the unit states of the changes are assumed as W, the distance between reference points as nW and the time required to relatively move between the reference points as T in terms of the number of counted clock pulses, the time necessary to relatively move the one pitch is obtained by T/n. The reading head reads the data in synchronism with the respective bits by a clock generated every T/n pulses.

## Operation

The present invention utilizes the facts that the unit states of the changes of the medium storing the data information are formed at predetermined pitches and the mechanism for relatively moving the reading head could operate constantly within an extremely short period of time without causing any substantial change.

In the present invention, a speed of the relative movement of the reading head is measured in a known length or distance, before reading the data to obtain a synchronizing signal on the basis of the measured speed.

This allows special clock bits for synchronization to be omitted from a region where the data is stored. This, in turn, remarkably increases the data storage region. This further assures accurate data reading because of its adequate synchronization.

Thus, the present invention is capable of omitting the track, which is exclusive for the synchronizing data, to increase the recordable data amount, while assuring accurate synchronization.

## BRIEF DESCRIPTION OF THE DRAWING

Fig.1 is an explanatory view showing one example of the format for writing data into a data information storage medium to which the present invention is applied;

Fig.2 is a block diagram of one form of a control apparatus for carrying out a synchronous control system embodying the present invention; and

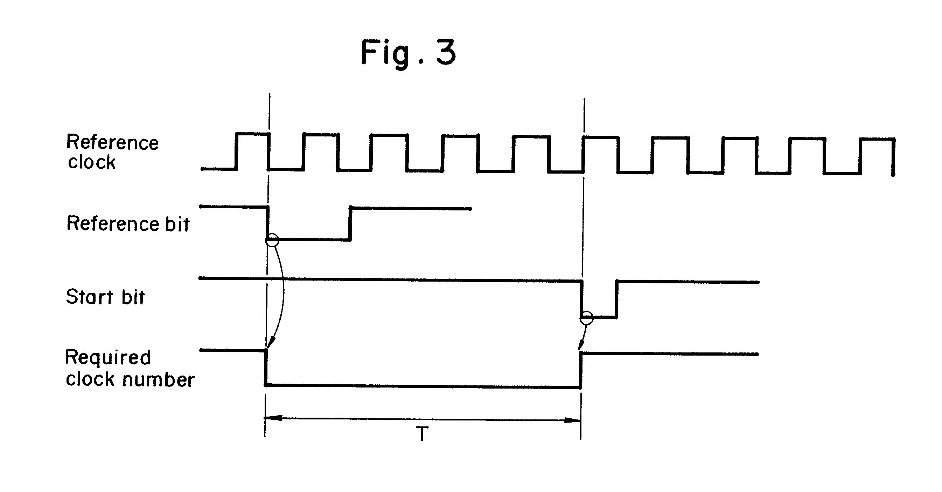

Fig.3 is a waveform diagram showing the operation of the synchronous control system of the embodiment.

PREFERRED EMBODIMENT OF THE INVENTION

A preferred embodiment of the present invention will now be described referring to the drawing.

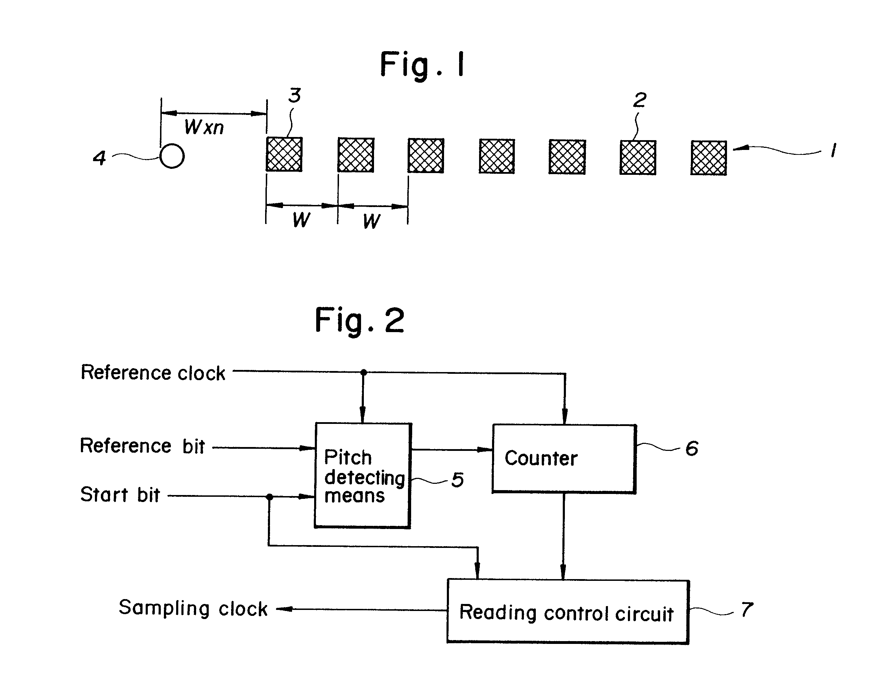

In the present embodiment, an optical recording medium is used as the data information storage medium. This optical recording medium has a plurality of tracks for writing the data information. In each of the data tracks, the data information is written in the form of states of physical or chemical changes of the storage medium, which are optically detectable, such as changes of reflectivity, transmittance, etc. More specifically, the data information is written in each of the tracks so that each of the states of the physical or chemical changes of the storage medium may correspond to a unit expression element of the data information to be stored (hereinafter referred to as a data bit) as partly shown in Fig.1. The data bits 2 are disposed at predetermined pitches.

In the data writing format of the optical storage medium, a reference bit 4 used as a reference point is provided on an extension of a data track 1 and outer than a start bit 3 at the leading head of the data track I as illustrated in Fig.1. This reference bit 4 and the start bit 3 are used as the reference points for synchronization in the present embodiment. The distance between the two reference points is set as n (integer) times as long as a pitch W of the data bits 2.

In relation with the optical recording medium having the data information stored therein as described above, the synchronous control for reading the data is carried out, for example, by an apparatus as illustrated in Fig. 2.

The apparatus as shown in Fig.2 comprises a pitch detecting circuit 5 for measuring a time which is necessary for a reading head, not shown, to relatively move between the reference bit and the start bit by counting reference clocks generated from a clock generator, not shown, and obtaining a clock number, which is 1/n of the measured value, for synchronization; a counter 6 which presets the synchronizing clock number and counts reference clocks for outputting a reading timing signal when the counted number reaches the preset synchronizing clock number to set the reading timing for the respective data bits; and a reading control circuit 7 for outputting sampling clocks as reading signals to the reading head, after a reading signal of the first bit has been input, in synchronism with the respective data bits, in response to the reading timing signal output from the counter 6.

The pitch detecting means 5 comprises, for example, a flip-flop circuit, a counter and a divider - (which are not shown). The flip-flop circuit is put into a set state upon input of a reading signal of the reference bit and put into a reset state upon input of a reading signal of the start bit. During a time when an output from a Q-terminal of the flip-flop circuit is at a high level, the counter counts the reference clocks. The counted value is divided into 1/n by the divider.

The operation of the data reading by using the optical recording medium as described above and the synchronous control system as described above will now be described.

First, the reading head, not shown, is relatively moved between the preset two reference points, namely the reference bit 4 and the start bit 3, the space of which is selected to be n times of the pitch W of the data bits, under the same conditions as in the data reading.

At this time, the time (required clock number) taken for the relative movement between the reference points is measured by the pitch detecting means 5 and a time necessary for the movement between the respective data bits, namely one pitch, is determined from the distance between the two points (n times of the data bit pitch) and the required clock number T. More particularly, when the reference bit reading signal is input from the reading head, the reference clocks are counted until the start bit reading signal is input to measure a time required to move between the two reference points. Then, the time necessary to move between the data bits is obtained as a synchronizing clock number T/n from the distance of the two points and the measured time.

The synchronizing clock number T/n is preset in the counter 6. The presetting is automatically carried out when the counted value of the counter 6 becomes 0. The counter 6 down-counts the reference clocks and outputs a reading timing signal when the counted value becomes 0. This reading timing signal is output as a sampling clock to the reading head through the reading control circuit 7.

Modifications of Embodiment

Although the changes of the reflectivity are utilized to form the states of the physical or chemical changes of the storage medium in the embodiment as mentioned above, changes of transmittance or polarization may alternatively be utilized.

In the embodiment as described above, an optical recording medium is used as the data information storage medium to which the synchronous control system of the present invention is applied, but another type of data information storage medium may alternatively be employed.

Moreover, the reference bit and the start bit are used as the two reference points in the embodiment as described above, but another references may be employable so far as they are in the same direction as the data track, the distance therebetween is known and they can be detected by the reading head.

## Claims

1. A synchronous control system for use in the reading of data from a data information storage medium in which the data is written so that unit states of changes of physical or chemical changes of the storage medium may correspond to bits of digital data constituting the data information to be stored and the states of the changes are disposed at predetermined pitches, which system comprises: relatively moving a reading head of a reading apparatus with respect to the data information storage medium, between two reference points the distance of which is known, under the same conditions as in the data reading, to measure a time necessary to move between the two points; determining a time necessary to move one pitch of the unit states of the changes storing the data information; and synchronizing the reading of the states of the changes by the reading head of the reading apparatus with the respective unit states of the changes.

2. A synchronous control system as claimed in claim 1, in which said distance between the two reference points is selected as integral multiples of the pitch of the unit states of the changes storing the data information.

3. A synchronous control system as claimed in claim 2, in which said distance between the two reference points is n times as long as the pitch of the unit states of the changes and the reading head of the reading apparatus is relatively moved between the reference points under the same conditions as in the data reading, to count reference clocks within the time of the relative movement, thereby to attain synchronization on the basis of a clock generated every 1/n of the counted value.

4. A synchronous control system as claimed in claim 1, in which said two reference points are a start bit and a stop bit provided on a data track.

5. A synchronous control system as claimed in claim 1, in which said two reference points are a start bit provided on a data track and a reference bit additionally provided outside of the data track.

6. A synchronous control system as claimed in claim 3, a time required for the reading head to move one pitch of the unit states of the changes is determined as being T/n, when the pitch of the unit states of the changes is W, the distance between the reference points is nW and a clock pulse number counted during the time of the movement between the reference points is T.

# Fig. 1

# Fig. 2

0 226 960

# Fig. 3

Reference clock

Reference bit

Start bit

Required clock number

$T$

0 226 960

| | DOCUMENTS CONSIDERED TO BE RELEVANT | | EP 86117245.0 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | EP - A2 - 0 109 551 (THE STYPHER CORPORATION) <br> * Fig. 2; page 5, line 20 - page 7, line 29 * <br> -- | 1-3 | G 11 B 27/10 <br><br> G 11 B 20/12 |
| X | GB - A - 2 113 891 (PIONEER) <br> * Fig. 2; page 2, lines 1-6 * <br> -- | 1 | |
| X | DE - A1 - 2 504 243 (PHILIPS') <br> * Fig. 1,3; claims 1-5; page 8, line 1 - page 10, line 10 * <br> -- | 1 | |
| A | DE - A1 - 2 613 018 (MICRO CONSULTANTS) <br> * Fig. 1,2; claims 1-10 * <br> ---- | 1 | |
| | | | TECHNICAL FIELDS SEARCHED (Int. Cl.4) <br><br> G 11 B 15/00 <br> G 11 B 20/00 <br> G 11 B 27/00 |

The present search report has been drawn up for all claims

| Place of search <br> VIENNA | Date of completion of the search <br> 18-03-1987 | Examiner <br> BERGER |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document